# EUROPÄISCHE PATENTANMELDUNG

(11) **EP 1 990 551 A2**
(43) Veröffentlichungstag der Anmeldung: **12.11.2008**
(21) Anmeldenummer: 08008478.3
(22) Anmeldetag: 06.05.2008
(51) Int. Cl.: F16B 25/10

(54) **Selbstbohrende Schraube**

(30) Priorität: 11.05.2007 DE 102007024224
(71) Anmelder: Adolf Würth GmbH & Co. KG, 74653 Künzelsau (DE)
(72) Erfinder: Humm, Siegfried, 74214 Schöntal- Westernhause (DE); Wunderlich, Andreas, 74635 Kupferzell (DE)
(74) Vertreter: Patentanwälte Ruff, Wilhelm, Beier, Dauster & Partner

(57) **Zusammenfassung**

Eine selbstbohrende Schraube enthält an dem einen Ende ihres Schraubenschafts eine kalt geformte Bohrerspitze (3) mit zwei Schneiden. Unmittelbar hinter der Bohrerspitze erstreckt sich ein Schraubgewinde (5) über einen kurzen Teil des Schafts, beispielsweise über vier Windungen. An diesen Gewindeabschnitt (5) schließt sich ein glatter Schaft (7) bis zu der Unterseite des Schraubenkopfs (1) an. Die Länge des gewindefreien Abschnitts (7) des Schafts ist etwas kürzer gewählt als die Dicke eines an einer Unterkonstruktion mit der Schraube zu befestigenden Bauteils.

Unmittelbar an den Gewindeabschnitt anschließend können Flügel (8) angebracht sein, die derart mit dem Schaft verbunden sind, dass sie bei Auftreffen auf die Unterkonstruktion abgeschert werden.

Anstelle der Flügel (8) oder zusätzlich zu den Flügeln kann der Schraubenschaft an dieser Stelle eine Ausbildung nach Art eines Steilgewindes (10) aufweisen.

## Beschreibung

Die Erfindung geht aus von einer selbstbohrenden Schraube, die eine Bohrspitze aufweist, mit der sie sich ihr Loch auch im Metall selbst bohrt.

Solche Schrauben dienen beispielsweise der Befestigung von aus Holz oder ähnlichem Material bestehenden Platten an einer metallischen Unterkonstruktion.

Der Vorschub von Bohrschrauben in dem Material, in das sie eingeschraubt werden, wird durch die Bohrfähigkeit der Bohrerspitze bestimmt. Wenn der Schaft ein Gewinde aufweist, und dieses Gewinde in Eingriff mit einem zu befestigenden Gegenstand gerät, so wird dieser Gegenstand abgehoben, da der Vorschub der Schraube beim Bohren kleiner ist als es der Steigung des Gewindes entspricht.

Um in dem erwähnten Anwendungsfall zu verhindern, dass der erwähnte Zwangsvorschub der Schraube durch das Gewinde und damit das Abheben der zu befestigenden Platte auftritt, sind bereits so genannte Flügelbohrschrauben bekannt. Bei diesen sind zwischen der Bohrerspitze und dem Gewinde des Schafts zwei radiale vorspringende Flügel ausgebildet. Diese vergrößern in dem zu befestigenden weicheren Material die Bohrung, so dass das Gewinde der Schraube nicht in Berührung mit dem Holz gelangt. Sobald die Flügel beim weiteren Einschrauben an das Metall stoßen, werden sie abgeschert, so dass sich jetzt das anschließende Gewinde in dem durch die Bohrspitze gebohrten Loch ein Gegengewinde schneiden oder formen kann (US 3358548).

Schrauben dieser Art haben häufig einen sehr langen Schaft, über den sich das Gewinde fast vollständig erstreckt. Damit soll erreicht werden, dass mit einer Schraubengröße unterschiedlich dicke Bauteile verarbeitet werden können. Der Verwender braucht in diesen Fällen die Dicke des anzuschraubenden Bauteils nicht zu kennen beziehungsweise nicht zu beachten.

Die Flügel müssen in der Weise an dem Schaft angeordnet sein, dass sie der Belastung während des Hindurcharbeitens durch das zu befestigende Bauteil standhalten und andererseits beim Erreichen der Unterkonstruktion sofort abbrechen. Bei dem zu befestigenden Bauteil kann es sich auch um hartes Holz handeln. Wenn die Flügel nicht oder nicht vollständig abscheren oder abbrechen, erweitern sie das von der Bohrerspitze gebohrte Loch, so dass sich das anschließende Gewinde kein Gegengewinde formen kann. In diesem Fall erfolgt keine korrekte Befestigung des Bauteils an der Unterkonstruktion.

Es hat sich herausgestellt, dass in bestimmten Fällen das Abbrechen der Flügel nicht immer gewährleistet ist.

Der Erfindung liegt die Aufgabe zu Grunde, eine selbstbohrende Schraube, insbesondere zur Befestigung von Bauteilen an Unterkonstruktionen, zu schaffen, bei der auch in ungünstigen Fällen eine sichere Befestigung gegeben ist.

Zur Lösung dieser Aufgabe schlägt die Erfindung eine selbstbohrende Schraube mit den im Anspruch 1 genannten Merkmalen vor. Weiterbildungen der Erfindung sind Gegenstand der abhängigen Patentansprüche.

Die Erfindung schlägt ebenfalls die Verwendung einer solchen Schraube zur Anbringung von Bauteilen an Unterkonstruktionen vor.

Durch die Verwendung eines Gewindeabschnitts, der sich unmittelbar an die Bohrerspitze anschließt und nur eine geringe axiale Länge aufweist, so dass der restliche Schaft der Schraube frei von Gewinde bleibt, wird das Abheben des Bauteils vermieden. Wegen nur weniger mit dem Bauteil in Eingriff stehender Gewindewindungen reichen die Kräfte nicht aus, das Bauteil abzuheben.

In Weiterbildung der Erfindung kann vorgesehen sein, dass der restliche Teil des Schraubenschafts, also der zwischen dem Gewindeabschnitt und dem Schraubenkopf vorhandene Teil des Schraubenschafts, glattflächig ausgebildet ist.

Es ist aber ebenfalls möglich und wird von der Erfindung vorgeschlagen, im Anschluss an den Gewindeabschnitt oder anders ausgedrückt zu Beginn des kein Gewinde aufweisenden Schaftabschnitts einen Abschnitt auszubilden, der sich nur über einen Teil des restlichen Schafts erstreckt und dort mindestens einen Vorsprung aufweist. Beispielsweise kann dieser Teil des Schafts einen oder mehrere derartige Flügel aufweisen. Diese Flügel sind dann im Gegensatz zum Stand der Technik an einer Stelle angeordnet, wo sie die Bildung eines Gegengewindes in dem durch die Bohrerspitze gebildeten Loch nicht verhindern können, da der Gewindeabschnitt das Gewinde schon geformt hat.

In diesem zweiten Schaftabschnitt, der also nicht glatt ausgebildet ist, kann auch ein Gewinde angeordnet sein, vorzugsweise ein Gewinde mit einem gegenläufigen Gewindesinn. Da die Schrauben zum Einschrauben üblicherweise ein Rechtsgewinde haben, könnte hier also ein Linksgewinde ausgebildet sein. Dieses Linksgewinde kann eine etwas größeren Steigung aufweisen als das Einschraubgewinde, insbesondere kann es auch als ein Steilgewinde ausgebildet sein.

In Weiterbildung der Erfindung kann vorgesehen sein, dass der Außendurchmesser dieses zweiten Gewindes geringfügig größer ist als der Außendurchmesser des Einschraubgewindes.

Es ist ebenfalls möglich und liegt im Rahmen der Erfindung, dass sich an den Gewindeabschnitt ein Abschnitt mit einem Steilgewinde anschließt, das sich nur über einen Teil des restlichen Schraubenschafts erstreckt.

Erfindungsgemäß kann in Weiterbildung vorgesehen sein, dass der Abschnitt mit dem zweiten Gewinde etwa die gleiche axiale Länge aufweist wie der Abschnitt mit dem Einschraubgewinde.

Erfindungsgemäß kann in Weiterbildung vorgesehen sein, dass der Schraubenkopf als Senkkopf ausgebildet ist, wobei er an seiner Unterseite vorzugsweise Fräsrippen aufweisen kann. Diese dienen mit dazu, den Schraubenkopf sauber zu versenken, insbesondere dann, wenn es sich bei dem zu befestigenden Bauteil um ein Bauteil aus hartem Holz handelt.

In nochmaliger Weiterbildung der Erfindung kann vorgesehen sein, dass der Außendurchmesser des Gewindes auf dem Gewindeabschnitt etwa dem Durchmesser des glattflächigen Schraubenschafts entspricht. Erfindungsgemäß wird eine solche Schraube zusammen mit einem Bauteil verwendet, dessen Dicke etwas größer ist als der Abstand zwischen dem Schraubenkopf und dem Beginn des Gewindeabschnitts. Der Gewindeabschnitt ist so in Relation zu der Dicke des zu befestigenden Bauteils angeordnet, dass er bei eingeschraubter Schraube über die Gegenseite des Bauteils hinaus in die Unterkonstruktion eingreift. Auf diese Weise ist dafür gesorgt, dass bei dem Bohren in der Unterkonstruktion nur wenige Windungen des Gewindes in dem zu befestigenden Bauteil angeordnet sind, die dadurch nicht ausreichend sind, um das Bauteil abzuheben.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: die Seitenansicht einer selbstbohrenden Schraube nach der Erfindung;
- Figur 2: die Seitenansicht einer Schraube bei einer zweiten Ausführungsform;
- Figur 3: die Seitenansicht einer selbstbohrenden Schraube bei einer dritten Ausführungsform;
- Figur 4: einen Querschnitt durch die Schraube in Richtung auf die Unterseite des Schraubenkopfs;
- Figur 5: die Anordnung einer Schraube neben einem Bauteil und einer Unterkonstruktion;
- Figur 6: eine den Figuren 1 bis 3 entsprechende Darstellung einer nochmals weiteren Ausführungsform.

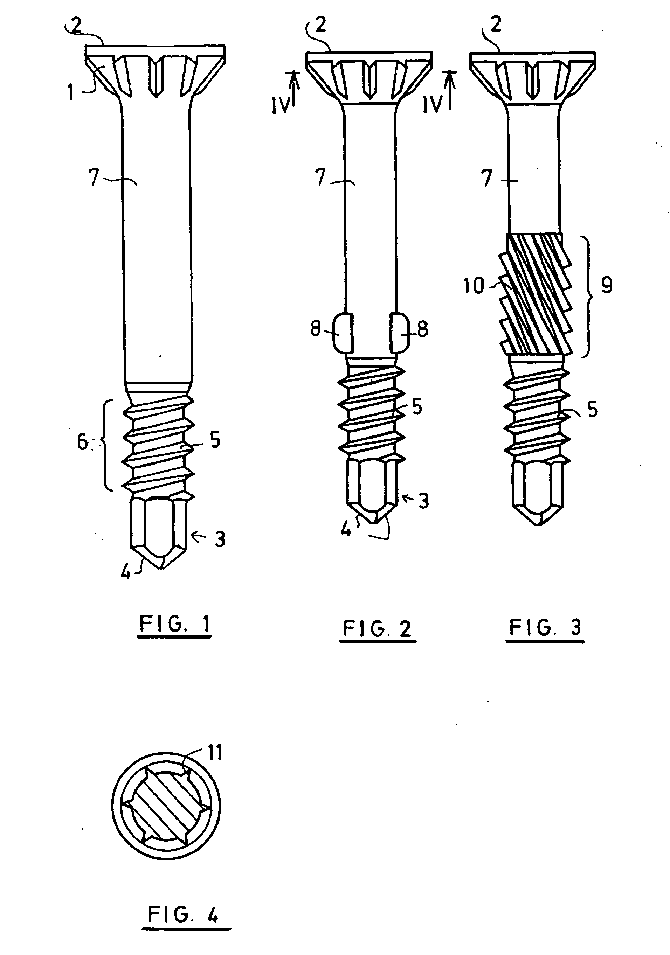

Die in Figur 1 dargestellte Schraube enthält an ihrem einen Ende einen Schraubenkopf 1, bei dem es sich in dem dargestellten Beispiel um einen Senkkopf mit einer kegelförmigen Unterseite handelt. Die ebene Stirnfläche 2 enthält eine in der Seitenansicht nicht zu sehende Schraubenantriebsvertiefung, die hier nicht näher erläutert wird, da es sich dabei um eine übliche Vertiefung handeln kann. Am gegenüberliegenden Ende der Schraube ist eine Bohrerspitze 3 ausgebildet, die durch Kaltschmieden hergestellt ist. Es handelt sich um eine echte Bohrerspitze, also mit zwei Schneiden 4. Diese Bohrerspitze 3 ist zum Bohren eines Lochs in einer metallischen Unterkonstruktion ausgebildet und bestimmt. Die Bohrerspitze 3 weist eine bestimmte axiale Länge auf, die so bemessen ist, dass die Unterkonstruktion erst vollständig durchbohrt werden kann, bevor das sich an die Bohrerspitze 3 anschließende Gewinde 5 des Gewindeabschnitts 6 das Loch erreicht. Der Gewindeabschnitt 6 ist der sich unmittelbar an die Bohrerspitze 3 anschließende Abschnitt des Schraubenschafts 7, der im restlichen Bereich bei der Ausführungsform der Figur 1 glattflächig ohne Vorsprünge ausgebildet ist. Wie man der Figur 1 ebenfalls entnehmen kann, ist der Außendurchmesser des Gewindes 5 etwa so groß wie der Durchmesser des glattflächigen Teils des Schraubenschafts 7.

Das Gewinde des Gewindeabschnitts 6 erstreckt sich über etwa vier Windungen.

Figur 2 zeigt eine der Figur 1 ähnliche Ausführungsform. Unmittelbar an den mit dem Gewinde 5 versehenen Gewindeabschnitt 6 anschließend weist der glattflächige Teil des Schraubenschafts 7 zwei radiale Vorsprünge in Form von Flügeln 8 auf, die den Flügeln der Schraube nach dem eingangs genannten Stand der Technik entsprechen. Jedoch sind diese Flügel 8 hinter dem Gewindeabschnitt 6 angeordnet. Sie sollen genauso wie im Stand der Technik dann abbrechen oder abscheren, wenn sie die Oberfläche der Unterkonstruktion erreichen.

Eine dritte Ausführungsform ist in Figur 3 dargestellt. Hier weist der nicht mit dem Gewinde 5 versehene Teil des Schraubenschafts 7 unmittelbar an den Gewindeabschnitt 6 anschließend einen Abschnitt 9 mit einem Steilgewinde 10 auf. Dieser mit dem Steilgewinde 10 versehene Abschnitt 9 erstreckt sich über etwa die Hälfte des Teils des Schafts zwischen dem Gewindeabschnitt 6 und dem Schraubenkopf 1.

Figur 4 zeigt einen Schnitt durch die Schraube etwa längs Linie IV-IV in Figur 2. Man kann hier sehen, dass um die Unterseite des Schraubenkopfs 1 herum sechs Fräsrippen 11 angeordnet sind.

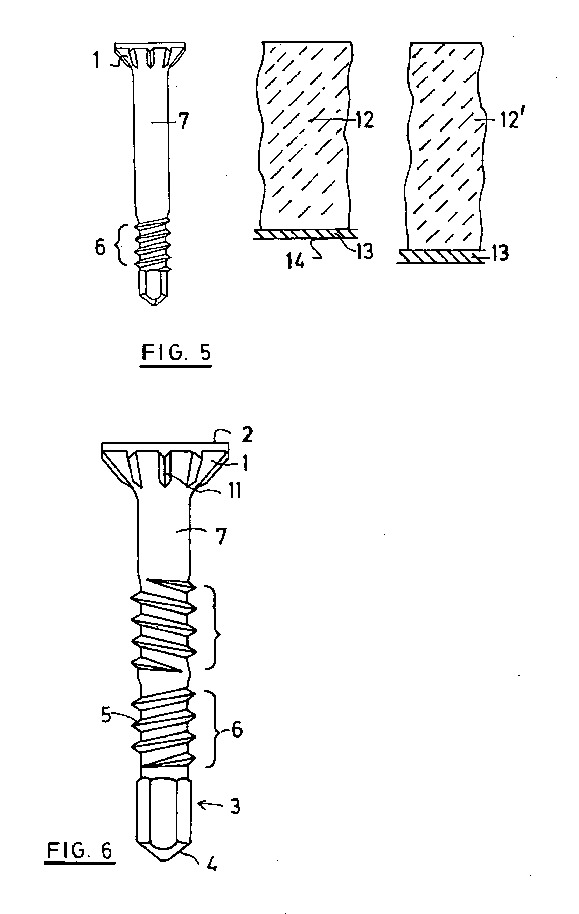

Während bislang die Schraube beschrieben wurde, zeigt Figur 5 einen Anwendungsfall für die Schraube. Die Schraube soll dazu dienen, ein abgebrochen dargestelltes Bauteil 12 an einer Unterkonstruktion 13 anzuschrauben. Für diesen Anwendungsfall, das heißt ein Bauteil 12 einer bestimmten Dicke, wird eine Schraube ausgewählt, bei der der Gewindeabschnitt 6 von dem Schraubenkopf 1 einen solchen Abstand aufweist, dass er zum größeren Teil aus der Rückseite des Bauteils 12 herausragt und in die Unterkonstruktion 13 eingreifen kann. Rechts in Figur 5 ist ein zweites Bauteil 12' dargestellt, das eine etwas größerer Dicke aufweist. Auch für dieses Bauteil 12 ' ist die in Figur 5 links dargestellte Schraube noch geeignet. Es ist hier also erforderlich, die Schraube anhand der Dicke des zu befestigenden Bauteils auszuwählen. Die Schraube muss so ausgewählt werden, dass in befestigtem Zustand der Gewindeabschnitt 6 mindestens bis zur gegenüberliegenden Seite 14 der Unterkonstruktion reicht, so dass in der Unterkonstruktion 13 ein vollständiges Gewinde gebildet wurde. Das Abheben des Bauteils 12 von der Unterkonstruktion 13 wird dadurch verhindert, dass der Gewindeabschnitt 6 nur wenige Windungen aufweist.

Die in Figur sechs in der Seitenansicht dargestellte Schraube unterscheidet sich von den in den Figuren 1 bis 3 dargestellten Schrauben dadurch, dass sich an den Abschnitt 6 mit dem Einschraubgewinde 5 ein zweiter Gewindeabschnitt 16 anschließt, in dem der Schaft 7 ein Gewinde 15 aufweist. Während das Gewinde 5 des ersten Gewindeabschnitts 6 ein Rechtsgewinde ist, da die Schraube üblicherweise durch Rechtsdrehen eingeschraubt wird, handelt es sich bei dem sich daran anschließenden Gewinde 15 um ein Linksgewinde. Es hat also die umgekehrte Gewinderichtung. Die Steigung des zweiten Gewindes 15 ist geringfügig größer als die Steigung des Einschraubgewindes 5. Die axiale Länge beider Gewindeabschnitte 6, 16 ist mindestens angenähert gleich. Der Außendurchmesser des zweiten Gewindes 15 ist ebenfalls geringfügig größer als der Außendurchmesser des Einschraubgewindes 5.

Auch die Ausführungsform nach Figur 6 dient dazu, zu verhindern, dass das zu befestigende Element von dem Blech 13 abhebt, bevor die Bohrspitze 3 das Metall durchbohrt hat.

## Patentansprüche

1. Selbstbohrende Schraube, mit
1.1 einem Schraubenkopf (1),
1.2 einer Bohrerspitze (3),
1.3 einem den Schraubenkopf (1) mit der Bohrerspitze (3) verbindenden Schaft (7), sowie mit
1.4 einem Gewinde (5), das
1.5 unmittelbar hinter der Bohrerspitze (3) beginnt und
1.6 sich nur über einen Teil des Schafts (7) erstreckt.

2. Schraube nach Anspruch 1, bei der der Schaft (7) zwischen dem Gewinde (5) und dem Schraubenkopf (1) glatt ausgebildet ist.

3. Schraube nach Anspruch 1 oder 2, bei der der Schaft (7) unmittelbar an das Gewinde (5) anschließend einen sich nur über einen Teil des Schafts (7) erstreckenden Abschnitt, in dem der Schaft (7) nicht glatt ausgebildet ist, aufweist, wobei der Schaft (7) dann anschließend bis zum Schraubenkopf (1) glatt ausgebildet ist.

4. Schraube nach einem der vorhergehenden Ansprüche, bei der der Schaft (7) unmittelbar an das Gewinde (5) anschließend mindestens einen radial abstehenden Abbrechflügel (8) aufweist.

5. Schraube nach einem der vorhergehenden Ansprüche, bei der der Schraubenschaft (7) unmittelbar an das Gewinde (5) anschließend einen Abschnitt (9,16) mit einem zweiten Gewinde (10,15) aufweist.

6. Schraube nach Anspruch 5, bei dem das zweite Gewinde gegenläufig ausgebildet ist.

7. Schraube nach Anspruch 5 oder 6, bei dem das zweite Gewinde (10, 15) eine größere Steigung aufweist als das erste Gewinde (5), und insbesondere als Steilgewinde (10) ausgebildet ist.

8. Schraube nach einem der Ansprüche 3 bis 7, bei der der sich an den Gewindeabschnitt (6) anschließende Abschnitt (9, 15) im wesentlichen die gleiche Länge aufweist wie der Gewindeabschnitt (6), wobei insbesondere der Außendurchmesser eines in diesem Abschnitt (9, 16) vorhandenen Gewindes (10, 15) geringfügig größer ist als der Außendurchmesser des Gewindes (5) in dem Gewindeabschnitt (6).

9. Schraube nach einem der vorhergehenden Ansprüche, bei der der Schraubenkopf (1) als Senkkopf ausgebildet ist.

10. Schraube nach einem der vorhergehenden Ansprüche, bei der die Unterseite des Schraubenkopfs (1) mit Fräsrippen (11) versehen ist.

11. Schraube nach einem der vorhergehenden Ansprüche, bei der der Außendurchmesser des Gewindes (5) dem Durchmesser des Schafts (7) entspricht.

12. Schraube nach einem der vorhergehenden Ansprüche, bei der die Länge des das Gewinde (5) aufweisenden Abschnitts (6) etwa doppelt so groß ist wie die Dicke einer Unterkonstruktion (13), in die die Schraube eingeschraubt werden soll.

13. Schraube nach einem der vorhergehenden Ansprüche, bei der der nicht mit dem Gewinde (5) versehene Teil des Schafts (7) etwa der Dicke eines zu befestigenden Bauteils (12) entspricht.

14. Schraube nach einem der vorhergehenden Ansprüche, bei der das Gewinde (5) zwei bis drei Windungen aufweist.

15. Verwendung einer Schraube nach einem der vorhergehenden Ansprüche, zur Befestigung eines Bauteils (12) an einer Unterkonstruktion (13), wobei die Schraube derart auf das Bauteil (12) abgestimmt ist, dass der mit dem Gewinde (5) versehene Abschnitt (6) bei montierter Schraube innerhalb der Unterkonstruktion (13) angeordnet ist und höchstens eine Gewindewindung in dem zu befestigenden Bauteil (12).
